# FASCICULE DE BREVET EUROPEEN

(11) **EP 1 597 880 B1**
(45) Date de publication et mention de la délivrance du brevet: **22.08.2012**
(21) Numéro de dépôt: 04715352.3
(22) Date de dépôt: 27.02.2004
(51) Int. Cl.: H04L 12/56, H04L 29/08

(54) **ORGANE DE MEDIATION MULTI-DOMAINES MULTI-FOURNISSEURS ENTRE FOURNISSEUR DE SERVICE APPLICATIF ET FOURNISSEUR DE RESSOURCE DANS UN RESEAU DE TELECOMMUNICATIONS**
VERMITTLUNGSVORRICHTUNG IN EINER UMGEBUNG MIT MEHREREN DOMÄNEN UND MEHREREN DIENSTANBIETERN ZWISCHEN ANWENDUNGSDIENSTANBIETERN UND RESSOURCENANBIETERN IN EINEM TELEKOMMUNIKATIONSNETZ
MULTI-SUPPLIER MULTI-DOMAIN MEDIATION ELEMENT BETWEEN AN APPLICATION SERVICE PROVIDER AND RESOURCE PROVIDER IN A TELECOMMUNICATION NETWORK

(30) Priorité: 28.02.2003 FR 0302471
(43) Date de publication de la demande: 23.11.2005
(73) Titulaire: FRANCE TELECOM, 75015 Paris (FR)
(72) Inventeur: FROMENTOUX, Gael, F-22560 Pleumeur Bodou (FR); JURE, Patrick, F-22700 Louannec (FR)
(74) Mandataire: Delumeau, François Guy
(86) Numéro de dépôt international: PCT/FR2004/000448
(87) Numéro de publication internationale: WO 2004/080004

(56) Documents cités:
- US-A1- 2002 116 234
- SALTOUROS M ET AL: "Network resource brokerage by means of distributed agent-based systems encompassing reinforcement learning schemes" COMPUTER COMMUNICATIONS, ELSEVIER SCIENCE PUBLISHERS BV, AMSTERDAM, NL, vol. 25, no. 16, 1 octobre 2002 (2002-10-01), pages 1415-1428, XP004358970 ISSN: 0140-3664
- CHANDRA P ET AL: "Network support for application-oriented QoS" QUALITY OF SERVICE, 1998. (IWQOS 98). 1998 SIXTH INTERNATIONAL WORKSHOP ON NAPA, CA, USA 18-20 MAY 1998, NEW YORK, NY, USA,IEEE, US, 18 mai 1998 (1998-05-18), pages 187-195, XP010280451 ISBN: 0-7803-4482-0

## Description

L'invention se situe dans le domaine des télécommunications. Plus précisément, l'invention concerne la mise en oeuvre de ressources chez des fournisseurs de ressources pour supporter un service de télécommunications notamment avec une qualité de service souhaitée de bout en bout.

Lorsqu'un client souhaite utiliser un service à qualité de services offert par un fournisseur de services applicatifs, il doit à un moment donné négocier cette qualité de services. Cette négociation peut se faire de différentes façons, par exemple en utilisant un protocole applicatif de négociation de session multimédia du type SIP ou RTSP, ou encore à travers une page web via le protocole http. Ensuite, lorsqu'un service avec qualité de services a été contracté par un client, le fournisseur de services applicatif est responsable vis-à-vis du client d'une délivrance conforme de ce service applicatif lors de son utilisation , en particulier en ce qui concerne la qualité de services. Le fournisseur de services applicatif doit donc entreprendre les actions qu'il convient pour que des ressources adéquates, en particulier en ce qui concerne la qualité de service offerte, soient mises en place dans les réseaux de télécommunications traversés qui participent à la mise à disposition de ressources supportant les services applicatifs demandés.

Nous assistons actuellement à une évolution des services offerts aux consommateurs avec l'émergence de services applicatifs avec qualité de service. Cette qualité de services est difficile à mettre en oeuvre puisqu'elle nécessite un certain nombre d'interactions entre les fournisseurs de services applicatifs à qualité de services et les fournisseurs de ressources qui vont fournir les ressources pour assurer cette qualité de service. En effet, le support d'un service applicatif peur nécessiter l'implication d'une multiplicité d'acteurs : par exemple, un fournisseur de services applicatifs et plusieurs fournisseurs de ressources peuvent intervenir pour la fourniture d'un unique service applicatif. Du fait de cette complexité d'interaction, on voit depuis peu apparaître un nouveau type de fournisseurs qui vient s'intercaler entre les fournisseurs de services réseau et les fournisseurs de services applicatifs : ce sont des fournisseurs de services de médiation, ou fournisseurs de services génériques, qui offrent leurs services en particulier aux autres fournisseurs de services.

On a proposé dans cette approche un système de médiation entre les fournisseurs de services applicatifs et les fournisseurs de ressources. Ce système se focalise sur les aspects allocation de ressources et conserve une indépendance de comportement entre fournisseurs de services applicatifs et fournisseurs de ressources. En d'autres termes, il ne fait que transmettre la demande de ressource depuis le fournisseur de services, vers le fournisseur de ressource.

Dans le cas d'un tel système de médiation, l'inconvénient principal réside donc dans la limitation de la médiation à la seule demande de ressources qui, bien qu'elle décharge le service de la tâche d'allocation de ressources, lui supprime tout contrôle sur ces dernières.

Le premier objectif de l'invention est de permettre la réalisation d'un système d'allocation de ressources chez n'importe quel fournisseur de ressources qui permette au service applicatif de rester indépendant des fournisseurs de ressources, tout en bénéficiant d'une certaine certitude quant à l'obtention de ces ressources le moment venu.

Le document US 2002/0116234 divulgue un système de médiation dans lequel un serveur de médiation alloue des ressources pour satisfaire une demande de performance particulière et délivre un ticket de réservation de ces ressources à l'utilisateur.

A titre d'art antérieur également, dans le cadre des réseaux mobiles, la version R5 du 3GPP a défini un cadre architectural qui permet d'assurer la mise en place de ressources pour assurer une qualité de service.
Toutefois, les services supportés sont uniquement des services (pour réseaux mobiles) qui négocient les sessions multimédia avec le protocole SIP, le mécanisme de contrôle de ressources est une partie intégrante du domaine de l'opérateur de réseaux mobiles, et les ressources sont toujours demandées sur l'initiative des utilisateurs finaux, donc sans l'indépendance souhaitée.

Dans le cas des réseaux mobiles, les inconvénients sont donc actuellement la limitation du mécanisme au domaine de l'opérateur mobile et aux services pour réseau mobile qui de surcroît utilisent le protocole SIP pour effectuer la négociation de session multimédia, et le mode de réservation de ressources qui est à l'initiative des utilisateurs et non du fournisseur de services.

De plus, ce type de médiation connu implique très souvent un modèle d'acteur tel qu'un acteur regroupe la fourniture de ressources dans son réseau plus la médiation associée, dans la mesure où le système de médiation doit posséder des informations détaillées sur les ressources de chaque réseau sous-jacent pour effectuer les allocations de ressources. Or, ces informations détaillées sur les ressources sont confidentielles et ne sont connues que du seul fournisseur de ressources.

L'invention vise un aménagement de télécommunication conforme aux revendications 1 à 8.

D'autres caractéristiques, buts et avantages de l'invention apparaîtront mieux à la lecture de la description détaillée qui va suivre, faite en référence aux figures annexées sur lesquelles :
- La figure 1 représente une série d'éléments coopérant entre eux pour la mise en oeuvre d'une variante de l'invention.
- La figure 2 est un diagramme illustrant des flux échangés entre éléments d'un aménagement de télécommunications, conformément à une mise en oeuvre de l'invention dans le cadre d'un service applicatif interréseaux.

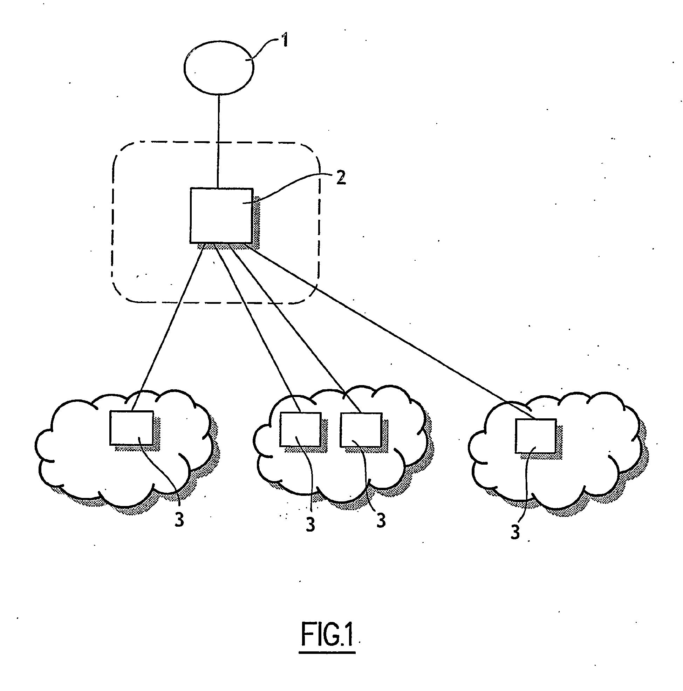

Sur la figure 1, on a représenté un serveur de médiation 2 pour la mise en oeuvre de ressources interfacé avec des fournisseurs de services applicatifs 1 d'une part et un ou des fournisseurs de ressources 3 d'autre part.

Dans la suite, on appellera fournisseur de ressource une entité physique ou fonctionnelle également connue dans l'art antérieur sous l'appellation « fournisseur de service réseau », habituellement rencontrée en complément de fournisseurs de service applicatif. Les fournisseurs de service applicatif sont quant à eux appelés ainsi par le fait que ces éléments, physiques ou fonctionnels, mettent en place un traitement de données qu'ils reçoivent pour fournir des données traitées qui sont expressément à destination d'un utilisateur final.

Les fournisseurs de ressources (ou fournisseurs de services réseau) ont, eux, une fonction de support et d'aide à la transmission et au transport des données dans le réseau.

Plus précisément, l'élément 1 est une application, chez un fournisseur de service applicatif, demandeuse de qualité de services de bout en bout. L'élément 2 est un serveur de médiation de mise en oeuvre de ressources chez un fournisseur de services de médiation. L'élément 3 est une entité permettant de contrôler et allouer des ressources chez un fournisseur de ressources. Pour la suite, on donnera génériquement la référence 3 à un fournisseur de ressource.

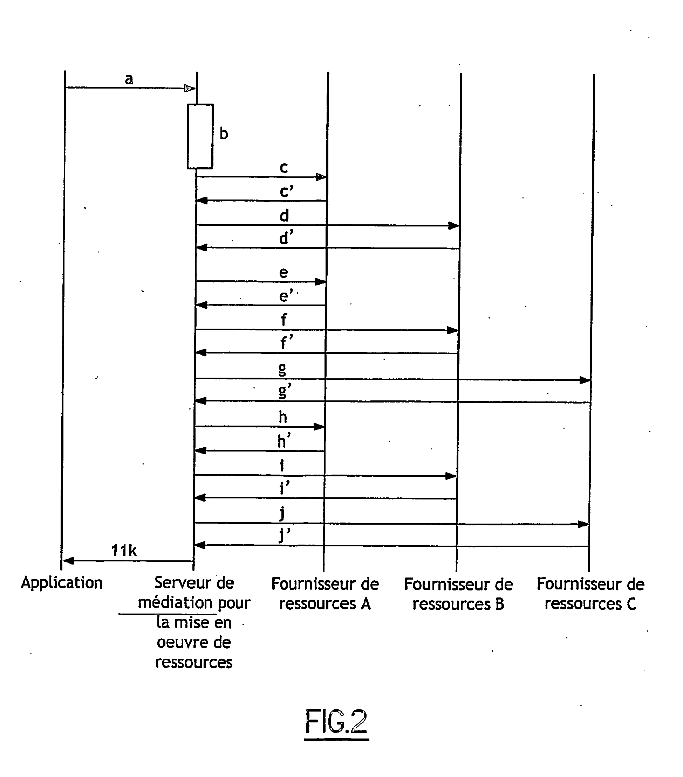

La figure 2 représente un exemple d'interactions entre les éléments de la figure 1 et des éléments environnants. C'est à partir de cet exemple que nous allons d écrire l'invention.

A titre d'exemple, on peut considérer que l'on veut mettre en place des ressources pour supporter un service applicatif entre un utilisateur accessible via le réseau d'accès (par exemple un réseau d'accès mobile) du fournisseur de ressources d'accès A et un autre utilisateur accessible via le réseau d'accès (par exemple un réseau d'accès xDSL) du fournisseur de ressources d'accès B, ce qui nécessite de passer par le réseau coeur (par exemple un backbone IP) d'un fournisseur de ressource de coeur C.

A l'étage a), l'application demande au serveur de médiation pour la mise en oeuvre de ressources de lui fournir son service support. Elle fournit notamment une identification des utilisateurs (utilisateur est ici à prendre dans un sens large car ce n'est pas forcément toujours un utilisateur final : il peut s'agir d'un serveur par exemple) à relier et la description de la qualité de service souhaitée.

A l'étage b), le serveur de médiation pour la mise en oeuvre de ressources établit la liste des fournisseurs de ressources qui vont être utilisés pour supporter le service applicatif tout en assurant la qualité de service de la session multimédia qui sera établie entre les utilisateurs. Le processus de sélection des fournisseurs n'est pas décrit ici. Le serveur de médiation pour la mise en oeuvre de ressources définit également les informations de qualité de service qu'il a fournir à chaque fournisseur de ressource sélectionné.

A l'étage c), le serveur de médiation pour la mise en oeuvre de ressources contacte le fournisseur de ressources A afin de lui fournir les informations nécessaires pour que le fournisseur de ressources A procède à une mise en oeuvre de ressources dans son réseau dans une seconde phase. Le message c') constitue un message d'acquittement positif. Ce message peut contenir d'autres informations si elles sont nécessaires lors de phases suivantes.

A l'étage d), les mêmes interactions qu'en c) prennent place, mais avec le fournisseur de ressources B. On considère dans cet exemple que la phase de fourniture d'informations pour l'autorisation du service réseau n'est pas nécessaire pour la mise en place de ressources dans le réseau du fournisseur de ressources C.

A l'étage e), lorsque le serveur de médiation pour la mise en oeuvre de ressources est sûr que tous les fournisseurs de ressources impliqués sont maintenant prêts à recevoir une demande de mise en oeuvre de ressources, il procède aux demandes de mise en oeuvre de ressources, ici avec le fournisseur de ressources A. Le protocole précis entre les 2 entités n'est pas décrit en détail. Il dépend notamment des fonctionnalités supportées par chaque fournisseur de ressource, et des protocoles utilisés qui peuvent différer.

Par exemple, e') est un message indiquant une mise en oeuvre correctement effectuée (d'autres messages existent pour indiquer un refus de réservation (mauvaise demande, manque de ressource, dans le réseau à l'instant donne...).

A l'étage f), les mêmes interactions qu'en e) sont mises en oeuvre, mais avec le fournisseur de ressources B.

A l'étage g), les mêmes interactions qu'en e) sont également mises en oeuvre, mais avec le fournisseur de ressources C.

A l'étage h), le serveur de médiation pour la mise en oeuvre de ressources a, grâce aux messages d'acquittement (accord, confirmation) qu'il a requis de chaque fournisseur de ressources, la confirmation de chaque fournisseur de ressources impliqué que les ressources nécessaires pour supporter la qualité de service demandée ont bien été mises en place.

Il procède alors à la validation des demandes, ce qui indique aux fournisseurs de ressources que les ressources mises en place peuvent maintenant être utilisées par le service.

On montre sur la figure 2 la validation des ressources chez le fournisseur de ressources A. Le protocole précis entre les 2 entités n'est pas décrit en détail. Par exemple, g') constitue une confirmation de la bonne validation des ressources chez le fournisseur de ressources A.

A l'étage i), les mêmes interactions qu'en g) sont mises en oeuvre, mais avec le fournisseur de ressources B.

A l'étage j), les mêmes interactions qu'en g) sont mises en oeuvre, mais avec le fournisseur de ressources C.

A l'étage k), le serveur de médiation pour la mise en oeuvre de ressources notifie l'application que les ressources correspondantes à la qualité de service de bout en bout demandée par l'application ont bien été mises en place et que le service peut maintenant s'exécuter.

On remarque sur l'exemple qu'en fonction des fournisseurs de ressources que le serveur de médiation pour la mise en oeuvre des ressources va contacter, le protocole peut différer ainsi que le contenu fonctionnel. Il est en effet possible que certains fournisseurs de ressources ne supportent que deux phases pour la mise en place des ressources, par exemple uniquement les phases de réservation et de validation comme dans l'exemple présenté ci-dessus. Le serveur de médiation pour la mise en oeuvre des ressources est alors capable de s'adapter à ces configurations.

Le serveur de médiation pour la mise en oeuvre de ressources supporte la seule interface avec les applications des fournisseurs de services applicatifs. Il gère les demandes de service de qualité de service de bout en bout, il est capable d'identifier/authentifier les fournisseurs de services clients. On peut prévoir une phase de souscription préalable à une demande effective de service. Le serveur de contrôle et d'allocation des ressources utilise les informations client à des fins de facturation, de suivi de demande. Le serveur de médiation informe les fournisseurs de services client du déroulement du service demandé.

Suite à une demande de service de qualité de service de bout en bout, une procédure interne lui permet de définir les fournisseurs de ressources qui vont participer à la mise en place de ce service de bout en bout. Il est capable aussi de décliner la demande de service de bout en bout en des demandes adaptées à chaque fournisseur de ressource participant.

Il s'interface avec les fournisseurs de ressources. Il supporte divers types de protocoles, plus ou moins riches fonctionnellement (les fournisseurs de ressources ne supportent pas tous las même procédure de mise en place des ressources dans leur réseau).

Il implémente la séquence « envoi d'information aux fournisseurs de ressources pour l'autorisation du service réseau » suivi de « demande de service réseau aux fournisseurs de ressources » suivi de « validation des demandes de service réseau ». Il sait s'adapter aux différents cas pouvant se présenter lors du déroulement de cette séquence (refus d'autorisation chez un fournisseur de ressource, échec lors de la réservation de ressources chez un fournisseur de ressources,...). Cela peut nécessiter des échanges supplémentaires avec le fournisseur de services applicatifs demandeur afin de le tenir au courant de la situation et le cas échéant de lui demander de modifier sa demande.

Préférentiellement, on met en oeuvre en outre des fonctions préalables de recherche d'adéquation entre le service applicatif et un support réseau de bout en bout et d'identification des fournisseurs de ressources susceptible de participer à la mise en oeuvre du support du service applicatif de bout en bout.

Ce mode de réalisation correspond donc à un serveur de médiation multi-domaines multi-fournisseurs pour la mise en oeuvre de ressources de bout en bout nécessaires au support de services applicatifs avec une qualité de service offert par les fournisseurs de services télécoms.

Plus généralement, et sans nécessairement que plusieurs réseaux entrent en jeu, le résultat obtenu permet à un fournisseur de services de médiation supportant ce système d'offrir à des fournisseurs de services applicatifs un service de contrôle et d'allocation de ressources pour supporter une qualité de service de bout en bout demandée. Grâce à cette invention, les fournisseurs de services applicatifs demandent simplement à un fournisseur de service de médiation supportant cette invention la mise en place de ressources de bout en bout pour supporter le service applicatif à qualité de services souscrit par leur client et en retour le fournisseur de service de médiation leur donne l'assurance que tout est prêt dans les réseaux qui vont supporter le service applicatif pour assurer la qualité de servie demandée, lorsque tout s'est bien passé. Dans le cas où une impossibilité quelconque empêcherait la mise en place des ressources nécessaires au service applicatif (par exemple si un fournisseur de ressources indispensables à la mise en oeuvre du support réseau de bout en bout est incapable de fournir le service réseau adéquat), le fournisseur de services de médiation indique également cet échec au fournisseur de services.

On notera que les différents fournisseurs de service (service applicatif ou service réseau) peuvent appartenir tous au même domaine, ou appartenir à des domaines différents.

Ainsi, l'invention trouve une application dans un contexte multi-domaines, où elle permet à un fournisseur de service applicatif 1, grâce à une médiation unifiée et rendue efficace, d'accéder à plusieurs domaines.

On parle alors de multi-domaines, les domaines étant différents du fait que les fournisseurs de services 1, 2 et 3 appartiennent à des acteurs commerciaux différents (par exemple opérateurs téléphoniques différents ou, par exemple, entités différentes de fourniture de contenus).

## Revendications

1. Aménagement de télécommunications comprenant, dans un réseau de télécommunications, un fournisseur de services applicatifs (1), un fournisseur de ressource (3) et un organe de médiation (2) entre le fournisseur de service applicatif (1) et le fournisseur de ressource (3), l'organe de médiation (2) comprenant des moyens pour recevoir une requête d'allocation de ressource (a) de la part du fournisseur de service (1), et requérir la ressource correspondante auprès du fournisseur de ressource (3), aménagement dans lequel :
- l'organe de médiation (2) comporte des moyens pour recevoir et prendre en compte au moins un message d'acquittement (c', d', e', f', g', h', i', j') de la part du fournisseur de ressource (3), quant au fait que la ressource nécessaire pour supporter la qualité de service est mise en oeuvre,
- l'organe de médiation (2) comprend des moyens pour recevoir une pluralité de requêtes d'allocation de ressources de la part d'un fournisseur de services applicatifs (1), et requérir un ensemble de ressources correspondantes auprès d'une pluralité de fournisseurs de ressource (3), l'organe de médiation étant de plus prévu pour recevoir et prendre en compte des messages d'acquittement (c', d', e', f, g', h', i', j') venant de chacun des fournisseurs de ressource, et pour émettre au moins une notification au fournisseur de service applicatif (1) selon laquelle l'ensemble des ressources demandées est mise en oeuvre par les fournisseurs (3), ledit aménagement de télécommunications étant **caractérisé en ce que** le fournisseur de service applicatif (1) est prévu pour fournir un service entre un utilisateur terminal accessible par un premier réseau d'accès et un utilisateur terminal accessible par un second réseau d'accès, le second réseau d'accès étant différent du premier par le fait que la communication entre les deux utilisateurs nécessite l'utilisation d'un troisième réseau associé à un fournisseur de ressource, l'organe de médiation étant prévu pour avertir le fournisseur de service applicatif (1) de l'obtention d'une ressource (3) auprès dudit fournisseur de ressource associé au troisième réseau.

2. Aménagement de télécommunications selon la revendication 1, **caractérisé en ce que** l'organe de médiation (2) est prévu pour requérir une ressource également auprès d'un fournisseur de ressource (3) appartenant au premier réseau et également auprès d'un fournisseur de ressource appartenant au deuxième réseau, requérir un message d'acquittement de chacun de ces fournisseurs de ressource (3), et émettre un message de notification au fournisseur de service applicatif (1) indiquant l'obtention des ressources de la part des fournisseurs de ressources (3) des trois réseaux.

3. Aménagement de télécommunications selon la revendication 1, **caractérisé en ce que** ledit organe de médiation (2) comporte des moyens pour émettre une notification au fournisseur de service applicatif (1) selon laquelle la ressource demandée (3) est mise en oeuvre par le fournisseur de ressource (3).

4. Aménagement de télécommunications selon la revendication 1, **caractérisé en ce que** ledit organe de médiation (2) est prévu pour émettre à l'attention du fournisseur de ressource (3) au moins deux messages successifs (c, e, h, d, f, i, g, j), correspondant à au moins deux étapes requises par le fournisseur de ressource (3) pour la mise en oeuvre de la ou des ressources.

5. Aménagement de télécommunications selon la revendication 1, **caractérisé en ce que** ledit organe de médiation (2) est prévu pour émettre à l'attention du fournisseur de ressource (3) trois messages successifs (c, e, h, d, f, i, g, j), requis comme nécessaires par le fournisseur de ressource (3) pour la mise en oeuvre de la ressource (3), le troisième message (i) étant une validation des deux premiers (d, f).

6. Aménagement de télécommunications selon la revendication 1, **caractérisé en ce que** l'organe de médiation (2) est prévu pour surveiller et acquérir un message d'acquittement positif (c', d', e', f, g', h', i', j') de la part du fournisseur de ressource, en réponse à l'un des messages successifs de demande de ressources (c, d, e, f, h, i, j,).

7. Aménagement de télécommunications selon la revendication 1, **caractérisé en ce que** l'organe de médiation (2) est prévu pour identifier un échec dans l'obtention de ressource auprès d'un fournisseur de ressource (3), et pour émettre un message au fournisseur de service applicatif (1) notifiant cet échec.

8. Aménagement de télécommunications selon la revendication 1, **caractérisé en ce que** ledit organe de médiation (2) comporte des moyens pour identifier, en fonction d'une demande de ressource reçue de la part du fournisseur de service applicatif (1), des fournisseurs de ressources susceptibles de fournir cette ou ces ressources, et émettre à leur attention le ou les messages de demande de ressource (c, d, e, f, g, h, i, j).

## Claims

1. Telecommunications arrangement comprising, in a telecommunications network, an application service provider (1), a resource provider (3) and a mediation member (2) between the application service provider (1) and the resource provider (3), the mediation member (2) comprising means for receiving a resource allocation request (a) from the service provider (1), and requesting the corresponding resource from the resource provider (3), in which arrangement:
- the mediation member (2) comprises means for receiving and registering at least one acknowledgement message (c', d', e', f', g', h', i', j') from the resource provider (3) relating to the fact that the resource necessary for supporting the quality of service is being used,
- the mediation member (2) comprises means for receiving a plurality of resource allocation requests from an application service provider (1), and requesting a set of corresponding resources from a plurality of resource providers (3), the mediation member also being designed to receive and register acknowledgement messages (c', d', e', f', g', h', i', j') coming from each of the resource providers, and to transmit at least one notification to the application service provider (1) according to which the set of resources requested is used by the providers (3), said telecommunications arrangement being **characterized in that** the application service provider (1) is designed to provide a service between a terminal user that can be accessed via a first access network and a terminal user that can be accessed via a second access network, the second access network being different from the first **in that** the communication between the two users requires the use of a third network associated with a resource provider, the mediation member being designed to notify the application service provider (1) of the obtaining of a resource (3) from said resource provider associated with the third network.

2. Telecommunications arrangement according to Claim 1, **characterized in that** the mediation member (2) is designed to request a resource also from a resource provider (3) belonging to the first network and also from a resource provider belonging to the second network, to request an acknowledgement message from each of these resource providers (3) and to transmit a notification message to the application service provider (1) indicating the obtaining of the resources on behalf of the resource providers (3) of the three networks.

3. Telecommunications arrangement according to Claim 1, **characterized in that** said mediation member (2) comprises means for transmitting a notification to the application service provider (1) according to which the requested resource (3) is used by the resource provider (3).

4. Telecommunications arrangement according to Claim 1, **characterized in that** said mediation member (2) is designed to transmit for the attention of the resource provider (3) at least two successive messages (c, e, h, d, f, i, g, j) corresponding to at least two steps required by the resource provider (3) for the use of the resource or resources.

5. Telecommunications arrangement according to Claim 1, **characterized in that** said mediation member (2) is designed to transmit for the attention of the resource provider (3) three successive messages (c, e, h, d, f, i, g, j), required as necessary by the resource provider (3) for the use of the resource (3), the third message (i) being a validation of the first two (d, f).

6. Telecommunications arrangement according to Claim 1, **characterized in that** the mediation member (2) is designed to monitor and acquire a positive acknowledgement message (c', d', e', f', g', h', i', j') from the resource provider in response to one of the successive messages for requesting resources (c, d, e, f, h, i, j).

7. Telecommunications arrangement according to Claim 1, **characterized in that** the mediation member (2) is designed to identify a failure in the obtaining of resources from a resource provider (3) and to transmit a message to the application service provider (1) reporting this failure.

8. Telecommunications arrangement according to Claim 1, **characterized in that** said mediation member (2) comprises means for identifying, as a function of a resource request received from the application service provider (1), resource providers capable of providing this or these resources, and transmitting for their attention the resource request message or messages (c, d, e, f, g, h, i, j).

## Patentansprüche

1. Telekommunikationseinrichtung, die in einem Telekommunikationsnetz einen Anwendungsdienstanbieter (1), einen Ressourcenanbieter (3) und eine Vermittlungsvorrichtung (2) zwischen dem Anwendungsdienstanbieter (1) und dem Ressourcenanbieter (3) aufweist, wobei die Vermittlungsvorrichtung (2) Mittel zum Empfangen einer Ressourcenzuweisungsanfrage (a) seitens des Dienstanbieters (1) aufweist, und zum Anfordern der entsprechenden Ressource bei dem Ressourcenanbieter (3), bei der:
- die Vermittlungsvorrichtung (2) Mittel aufweist, um mindestens eine Quittierungsmitteilung (c', d', e', f', g', h', i', j') seitens des Ressourcenanbieters (3) in Zusammenhang mit der Tatsache, dass die zum Unterstützen der Dienstqualität erforderliche Ressource umgesetzt wird, zu empfangen und zu berücksichtigen,
- die Vermittlungsvorrichtung (2) Mittel aufweist, um eine Vielzahl von Ressourcenzuweisungsanfragen seitens eines Anwendungsdienstanbieters (1) zu empfangen und eine Einheit entsprechender Ressourcen bei einer Vielzahl von Ressourcenanbietern (3) anzufordern, wobei die Vermittlungsvorrichtung außerdem zum Empfangen und Berücksichtigen der Quittierungsmeldungen (c', d', e', f', g', h', i', j'), die von jedem der Ressourcenanbieter kommen, und zum Senden mindestens einer Bekanntgabe an den Anwendungsdienstanbieter (1), gemäß welcher sämtliche verlangten Ressourcen von den Anbietern (3) umgesetzt werden, vorgesehen ist, wobei die Telekommunikationseinrichtung **dadurch gekennzeichnet ist, dass** der Anwendungsdienstanbieter (1) dazu vorgesehen ist, einen Dienst zwischen einem Benutzerterminal, das über ein erstes Zugangsnetz zugänglich ist, und einem Benutzerterminal, das über ein zweites Zugangsnetz zugänglich ist, zu liefern, wobei sich das zweite Zugangsnetz von dem ersten durch die Tatsache unterscheidet, dass die Kommunikation zwischen den zwei Benutzern den Gebrauch eines dritten Netzes, das zu einem Ressourcenanbieter gehört, erfordert, wobei die Vermittlungsvorrichtung dazu vorgesehen ist, den Anwendungsdienstanbieter (1) über das Erhalten einer Ressource (3) bei dem Ressourcenanbieter, der zu dem dritten Netz gehört, zu informieren.

2. Telekommunikationseinrichtung nach Anspruch 1, **dadurch gekennzeichnet, dass** die Vermittlungsvorrichtung (2) dazu vorgesehen ist, eine Ressource auch bei einem Ressourcenanbieter (3), der zu dem ersten Netz gehört, und auch bei einem Ressourcenanbieter, der zu dem zweiten Netz gehört, anzufordern, eine Quittierungsmeldung jedes dieser Ressourcenanbieter (3) anzufordern und an den Anwendungsdienstanbieter (1) eine Bekanntgabemeldung zu senden, die das Erhalten der Ressourcen seitens der Ressourcenanbieter (3) der drei Netze angibt.

3. Telekommunikationseinrichtung nach Anspruch 1, **dadurch gekennzeichnet, dass** die Vermittlungsvorrichtung (2) Mittel aufweist, um eine Bekanntgabe an den Anwendungsdienstanbieter (1) zu senden, gemäß welcher die verlangte Ressource (3) von dem Ressourcenanbieter (3) umgesetzt wird.

4. Telekommunikationseinrichtung nach Anspruch 1, **dadurch gekennzeichnet, dass** die Vermittlungsvorrichtung (2) dazu vorgesehen ist, an den Ressourcenanbieter (3) mindestens zwei aufeinanderfolgende Meldungen (c, e, h, d, f, i, g, j) zu senden, die mindestens zwei Schritten entsprechen, die von dem Ressourcenanbieter (3) zur Umsetzung der Ressource oder der Ressourcen angefordert werden.

5. Telekommunikationseinrichtung nach Anspruch 1, **dadurch gekennzeichnet, dass** die Vermittlungsvorrichtung (2) dazu vorgesehen ist, an den Ressourcenanbieter (3) drei aufeinanderfolgende Meldungen (c, e, h, d, f, i, g, j) zu senden, die von dem Ressourcenanbieter (3) zur Umsetzung der Ressource (3) als erforderlich angefordert werden, wobei die dritte Meldung (i) eine Bestätigung der zwei ersten (d, f) ist.

6. Telekommunikationseinrichtung nach Anspruch 1, **dadurch gekennzeichnet, dass** die Vermittlungsvorrichtung (2) dazu vorgesehen ist, eine positive Quittierungsmeldung (c', d', e', f', g', h', i', j') seitens des Ressourcenanbieters als Antwort auf eine der aufeinanderfolgenden Ressourcenanfragemeldungen (c, d, e, f, h, i, j) zu überwachen und zu erfassen.

7. Telekommunikationseinrichtung nach Anspruch 1, **dadurch gekennzeichnet, dass** die Vermittlungsvorrichtung (2) dazu vorgesehen ist, ein Scheitern bei dem Erhalten einer Ressource bei einem Ressourcenanbieter (3) zu identifizieren und eine Meldung an den Anwendungsdienstanbieter (1), die dieses Scheitern bekannt gibt, zu senden.

8. Telekommunikationseinrichtung nach Anspruch 1, **dadurch gekennzeichnet, dass** die Vermittlungsvorrichtung (2) Mittel aufweist, um in Abhängigkeit von einer seitens des Anwendungsdienstanbieters (1) eingegangenen Ressourcenanfrage Ressourcenanbieter zu identifizieren, die in der Lage sind, diese Ressource oder diese Ressourcen zu liefern, und ihnen die Ressourcenanfragemeldung oder Ressourcenanfragemeldungen (c, d, e, f, g, h, i, j) zusenden.
